# EUROPÄISCHE PATENTANMELDUNG

(11) **EP 3 162 504 A1**
(43) Veröffentlichungstag der Anmeldung: **03.05.2017**
(21) Anmeldenummer: 15183894.3
(22) Anmeldetag: 04.09.2015
(51) Int. Cl.: B25B 13/06, F16B 23/00, F16B 35/06, F16B 37/00

(54) **WERKZEUGTEIL ZUR ÜBERTRAGUNG VON ANTRIEBSKRÄFTEN AUF MUTTERN ODER MUTTER ODER GEWINDESTAB**

(30) Priorität: 05.09.2014 DE 102014013215; 15.10.2014 DE 102014015239
(71) Anmelder: Kronenberg, Matthias, 54292 Trier (DE); Schmalenberg, Stefan, 54292 Trier (DE)
(72) Erfinder: Kronenberg, Matthias, 54292 Trier (DE); Schmalenberg, Stefan, 54292 Trier (DE)
(74) Vertreter: Wieske, Thilo

(57) **Zusammenfassung**

Die vorliegende Erfindung betrifft ein Werkzeugteil zur Übertragung von Antriebskräften auf Muttern zu deren Bewegung entlang eines Gewindestabes durch eine Rotation der Mutter um die Längsachse des Gewindestabes oder auf Angriffsmittele eines Gewindestabes, wobei das Werkzeugteil einen hohlzylinderförmigen Bestandteil aufweist, der auf seiner Außenfläche und/oder Bodenfläche und/oder Deckenfläche eine zahnförmige Teilung aufweist, die in formschlüssigem Wirkeingriff steht bzw. bringbar ist zu einer zahnförmigen Teilung eines Antriebselementes derart, dass bei einer Drehung des Antriebselements um eine Drehachse des Antriebselements das hohlzylinderförmige Bestandteil des Werkzeugteils in eine Drehung um die Längsachse des hohlzylinderförmigen Bestandteils versetzt wird, wobei der hohlzylinderförmige Bestandteil eine Innenöffnung aufweist, die in formschlüssigen Eingriff mit der Außenfläche der Mutter oder des Angriffsmittels bringbar ist, oder wobei der hohlzylinderförmige Bestandteil eine Innenöffnung aufweist, die in formschlüssigen Eingriff mit der Außenfläche eines Adapterstücks bringbar ist, dessen Innenöffnung derart bemessen ist, dass diese in formschlüssigen Eingriff mit einer Außenfläche einer Mutter oder eines Angriffsmittels einer bestimmten Normgröße bringbar ist. Die Erfindung betrifft ebenso eine Mutter oder einen Gewindestab mit einem Angriffsmittel, an die die wesentlichen Teile des hohlzylinderförmigen Bauteils direkt angebracht sind.

## Beschreibung

Die vorliegende Erfindung betrifft ein Werkzeugteil zur Übertragung von Antriebskräften auf Muttern nach dem Oberbegriff des Anspruchs 1 oder eine Mutter nach dem Oberbegriff des Anspruchs 3 oder einen Gewindestab nach dem Oberbegriff des Anspruchs 4.

Es ist bereits bekannt, Muttern entlang von Gewindestangen bzw. von Schrauben zu bewegen durch eine Rotation der Mutter um die Längsachse des Gewindestabes.

Dazu ist es bekannt, eine sogenannte Nuss auf die Mutter aufzusetzen, die mit ihrer Innenseite die Außenfläche der Mutter formschlüssig umgreift. Die Nuss weist weiterhin eine Aufnahme auf für ein Antriebsteil einer Handhabe, die als sogenannte Ratsche oder Umschaltknarre ausgestaltet sein kann. Damit kann die Nuss gedreht werden, ohne dass die Handhabe der Nuss voll um 360° gedreht werden muss. Es genügt, wenn die Handhabe lediglich in einem Teilbereich des Umfangs beweglich ist. Durch eine Hin- und Herbewegung in diesem Teilbereich ist die Nuss drehbar. Die Nuss weist dabei eine sacklochförmige Aufnahme für die Mutter auf. Dies bedingt, dass eine Mutter nur über eine begrenzte Strecke mittels einer Nuss auf die Gewindestange aufschraubbar ist. Wenn die Spitze der Gewindestange an dem Ende der sacklochförmigen Aufnahme der Nuss anstößt, kann die Nuss die Mutter nicht weiter antreiben.

Andere Werkzeuge wie beispielsweise ein Maul- bzw. Gabelschlüssel oder ein Ringschlüssel können die Mutter auch antreiben, wenn diese über eine weitere Strecke auf den Gewindestab aufgeschraubt werden muss. Diese Werkzeuge haben allerdings den Nachteil, dass diese immer wieder von dem formschlüssigen Eingriff zur Mutter abgesetzt werden müssen und anschließend wieder neu angesetzt werden müssen, um die Mutter über einen Teil des Winkels von 360° zu drehen, wenn das Werkzeug sich aus Platzgründen nicht um den vollen Umfang von 360° drehen lässt.

Das Aufschrauben einer Mutter auf eine längere Gewindestange hat praktische Bedeutung beispielsweise im Gerüstbau.

Es ist ebenso bekannt, Schrauben mittels eines Werkzeugs zu drehen, indem das Werkzeug (beispielsweise ein Maul- oder Gabelschlüssel) formschlüssig am Außenumfang des Kopfes einer Schlossschraube angreift. Der Kopf dieser Schlossschraube ist ein Ausführungsbeispiel für ein Angriffsmittel im Sinne der vorliegenden Beschreibung, das fest mit einem Gewindestab verbunden ist. Der Gewindestab ist dabei das Gewinde der Schlossschraube. Im Rahmen der vorliegenden Erfindung kann der Gewindestab auch mit einem anderen Angriffsmittel ausgestattet sein. Eine mögliche weitere Ausführungsform für ein Angriffsmittel ist beispielsweise eine Ausgestaltung mit einem Haken. In diesen Haken kann ein Drahtseil eingehängt werden, so dass das Angriffsmittel dann den Haken eines Gewindespanners darstellt.

Der vorliegenden Erfindung liegt die Aufgabe zu Grunde, ein Werkzeugteil vorzuschlagen, mittels dem die Bewegung einer Mutter entlang einer Gewindestange durch eine Rotation der Mutter um die Längsachse der Gewindestange vereinfacht wird. Die Gewindestange kann dabei auch Bestandteil beispielsweise einer Schraube sein. In diesem Fall weist die Gewindestange noch ein Angriffsmittel (in diesem Fall einen Schraubenkopf) auf. Es soll ebenso möglich sein, die Gewindestange mit dem Angriffsmittel zu drehen.

Diese Aufgabe wird erfindungsgemäß gemäß Anspruch 1 gelöst, indem das Werkzeugteil einen hohlzylinderförmigen Bestandteil aufweist sowie ein Antriebsankoppelteil, wobei der hohlzylinderförmige Bestandteil auf seiner Außenfläche und/oder Bodenfläche und/oder Deckenfläche eine zahnförmige Teilung aufweist, die in formschlüssigem Wirkeingriff steht bzw. bringbar ist zu einer zahnförmigen Teilung eines Antriebselementes. Dieser Wirkeingriff bedeutet, dass bei einer Ankopplung des Antriebselementes an das Antriebsankoppelteil und bei einer Drehung des Antriebselementes um eine Drehachse des Antriebselements der hohlzylinderförmige Bestandteil des Werkzeugteils in eine Drehung um die Längsachse des hohlzylinderförmigen Bestandteils versetzt wird. Weiterhin weist der hohlzylinderförmige Bestandteil eine Innenöffnung auf, die in formschlüssigen Eingriff mit der Außenfläche der Mutter bzw. dem Angriffsmittel bringbar ist. Alternativ kann der hohlzylinderförmige Bestandteil eine Innenöffnung aufweisen, die in formschlüssigen Eingriff mit der Außenfläche eines Adapterstücks bringbar ist, dessen Innenöffnung derart bemessen ist, dass diese in formschlüssigen Eingriff mit einer Außenfläche einer Mutter oder eines Angriffsmittels einer bestimmten Normgröße bringbar ist. Alternativ kann der hohlzylinderförmige Bestandteil drehfest verbindbar sein mit einem Adapterstück, dessen Innenöffnung derart bemessen ist, dass diese in formschlüssigen Eingriff mit einer Außenfläche einer Mutter oder eines Angriffsmittels einer bestimmten Normgröße bringbar ist

Das Antriebselement kann dabei bezüglich einer Rotation um die Längsachse der Gewindestange ortsfest verbleiben. Das Antriebselement wird dabei lediglich gemeinsam mit dem gesamten Werkzeugteil mit der Mutter bei deren Bewegung entlang der Gewindestange bewegt bzw. gemeinsam mit dem Angriffsmittel und dem Gewindestab, wenn diese durch die Rotation bedingt dann auch in axialer Richtung bewegt werden. In dem Werkzeugteil erfolgt ein Antrieb des hohlzylinderförmigen Bestandteils im Sinne einer Rotation um die Längsachse des Gewindestabes, so dass dadurch die Mutter durch die Rotation um den Gewindestab entlang des Gewindestabes bewegt wird bzw. das Angriffsmittel und der Gewindestab.

Der formschlüssige Eingriff mit der Außenfläche der Mutter bzw. der Außenfläche des Angriffsmittels bzw. der Außenfläche des Adapterstückes bedeutet, dass bei einer Drehung des hohlzylinderförmigen Bestandteils um die Längsachse des Gewindestabes das Adapterstück bzw. die Mutter bzw. das Angriffsmittel mitgedreht wird. Dies kann in an sich bekannter Weise realisiert sein, indem die Mutter bzw. das Angriffsmittel eine Außenfläche aufweist, die als Sechskant ausgebildet ist.

Abhängig von der konstruktiven Ausgestaltung des Werkzeugteils kann die Drehachse des Antriebselementes relativ zur Längsachse der Gewindestange unterschiedlich orientiert sein.

Beispielsweise kann der hohlzylinderförmige Bestandteil eine nach außen abfallende abgeschrägte Oberfläche aufweisen, in die die zahnförmige Teilung eingebracht ist. Das Antriebselement kann als Kegelrad mit einer zahnförmigen Teilung in dem Kegel ausgestaltet sein, das eine Antriebsachse aufweist, die parallel orientiert ist zur Längsachse der Gewindestange.

Beispielsweise kann bei einer anderen Ausgestaltung der hohlzylinderförmige Bestandteil auf der Außenseite die zahnförmige Teilung aufweisen. Das Antriebselement kann in diesem Fall als Zahnrad ausgestaltet sein, dass ebenfalls um eine Drehachse drehbar ist, die parallel zur Längsachse der Gewindestange orientiert ist.

Das Antriebselement kann auch als Schneckenantrieb ausgestaltet sein. Der Schneckenantrieb weist dabei ein Außengewinde auf, das im Sinne dieser Erfindung die zahnförmige Teilung des Antriebselementes darstellt.

Bedingt durch die Konstruktion des Werkzeugteils sowie weiterhin auch abhängig von einem Winkel der zahnförmigen Teilung kann die Drehachse des Antriebselementes zur Längsachse der Gewindestange unterschiedlich orientiert sein. Die Drehachse des Antriebselementes kann parallel zur Gewindestange orientiert sein, oder auch senkrecht zur Gewindestange. Ebenso kann die Drehachse des Antriebselementes schräg zur Gewindestange orientiert sein.

Die Orientierung der Drehachse hat Einfluss auf die Platzverhältnisse für den Antrieb des Antriebselementes. Ist die Drehachse des Antriebselementes beispielsweise parallel zur Gewindestange, kommt es auf den seitlichen Abstand der Drehachse des Antriebselementes zur Gewindestange an, ob und wie sich Antriebsmittel anbringen lassen.

Es ist vorteilhaft, wenn die Drehachse des Antriebselementes - ggf. auch schräg - nach unten orientiert ist. Vorteilhaft wird damit durch das Eigengewicht des Werkzeugteils und der Antriebsmittel das Werkzeugteil auf die Mutter aufgedrückt. Dies gilt zumindest dann, wenn die Bewegungsrichtung der Mutter bzw. des Gewindestabes mit dem Angriffsmittel bei einer Drehung in Befestigungsrichtung nach unten orientiert ist.

Das Werkzeugteil kann fertig montiert sein. Ebenso kann das Werkzeugteil auch so ausgestaltet sein, dass das Antriebselement lösbar an dem hohlzylinderförmigen Bestandteil angebracht ist. In diesem Fall kann zunächst der hohlzylinderförmige Bestandteil auf die Mutter bzw. das Angriffsmittel aufgesetzt werden. Anschließend kann das Antriebselement angebracht werden. Es ist selbstverständlich möglich, die entsprechenden Teil auch in anderer Reihenfolge zusammenzufügen.

Der hohlzylinderförmige Bestandteil kann so ausgestaltet sein, dass seine Innenöffnung direkt in formschlüssigen Eingriff mit einer Mutter bringbar ist. Bei dieser Ausgestaltung werden verschiedene Werkzeugteile benötigt, um Muttern unterschiedlicher Größe betätigen zu können. Der formschlüssige Eingriff mit der Mutter hängt von der Außenfläche der Mutter ab und kann beispielsweise ein Sechskant sein.

Alternativ ist es auch möglich, dass die Innenöffnung des hohlzylinderförmigen Bestandteils so ausgestaltet ist, dass der hohlzylinderförmige Bestandteil ein Adapterstück formschlüssig umschließt. Bei dieser Ausgestaltung können mit einem Werkzeugteil Muttern unterschiedlicher Größe betätigt werden durch Einsetzen von jeweils passenden Adapterstücken. Es muss daher nicht für jede Mutterngröße ein eigenes Werkzeugteil vorgehalten werden.

Alternativ kann der hohlzylinderförmige Bestandteil drehfest verbindbar sein mit einem Adapterstück, dessen Innenöffnung derart bemessen ist, dass diese in formschlüssigen Eingriff mit einer Außenfläche einer Mutter oder eines Angriffsmittels einer bestimmten Normgröße bringbar ist.

Es ist darauf zu achten, dass der hohlzylinderförmige Bestandteil eine ausreichend große Innenöffnung aufweist, durch die der Gewindestab hindurchgeführt werden kann, wenn mit dem Adapterstück eine Mutter auf ein Gewinde aufgeschraubt werden soll.

In einer vorteilhaften Ausgestaltung kann der hohlzylinderförmige Bestandteil sowie das ggf. vorhandene Adapterstück derart mehrteilig ausgebildet sein, dass diese Teile um die Gewindestange herum zusammengesetzt werden können. Bei dieser Ausgestaltung muss der hohlzylinderförmige Bestandteil vorteilhaft nicht über die volle Länge der Gewindestabes aufgeschoben werden. Diese mehrteilige Ausgestaltung hat auch Vorteile, wenn eine Mutter als Überwurfmutter in einem geschlossenen Kreis angeordnet ist, beispielsweise zur dichten Verbindung von Rohren in der Sanitärinstallation. Vorteilhaft ist es dann möglich, den hohlzylinderförmigen Bestandteil um die Überwurfmutter bzw. das entsprechende Rohrsystem herum zusammenzusetzen.

Gemäß Anspruch 2 weist das Werkzeugteil eine Handhabe auf, mittels der das Werkzeugteil an einem anderen Punkt des Außenumfangs gehalten werden kann, als dies dem Angriffspunkt des Antriebselementes an dem hohlzylinderförmigen Bestandteil entspricht.

Durch das Betätigen des Antriebselementes wird - bezogen auf die Längsachse der Gewindestange - einseitig eine Kraft auf die Mutter bzw. das Angriffsmittel ausgeübt, die parallel zur Gewindestange orientiert ist. Diese Kraft bewirkt ein Drehmoment, durch das die Mutter bezogen auf die Gewindestange verkanten kann bzw. die Gewindestange insgesamt, wenn diese fest mit dem Angriffsmittel verbunden ist.

Durch die Handhabe gemäß Anspruch 2 kann eine weitere Kraft ausgeübt werden, die parallel zur Gewindestange orientiert ist und durch die das Drehmoment kompensiert wird, das durch die Handhabung des Antriebselementes auf die Mutter bzw. das Angriffsmittel ausgeübt wird.

Im Ergebnis wird dadurch das Verkanten der Mutter bzw. der Gewindestange vermieden.

Anspruch 3 betrifft eine Mutter mit einem Innengewinde. Die Mutter weist ein Schraubteil und ein Antriebsankoppelteil auf. Die Mutter weist in ihrem Schraubteil auf ihrer Außenfläche und/oder ihrer Bodenfläche und/oder ihrer Deckenfläche eine zahnförmige Teilung auf. Diese zahnförmige Teilung ist in formschlüssigem Wirkeingriff bringbar zu einer zahnförmigen Teilung eines Antriebselementes derart, dass bei einer Ankopplung des Antriebselementes an das Ankoppelteil und bei einer Drehung des Antriebselements um eine Drehachse des Antriebselements das Schraubteil der Mutter in eine Drehung um die Längsachse des Innengewindes der Mutter versetzt wird.

Anspruch 3 betrifft gegenüber Anspruch 1 eine Ausgestaltung, bei der kein separates Werkzeugteil vorgesehen wird zum Antrieb einer herkömmlichen Mutter. Bei der Ausgestaltung nach Anspruch 3 sind die entsprechenden Teile in die Mutter integriert, so dass diese mit einem entsprechenden Antriebselement angetrieben werden kann. Das Antriebselement wird dabei mit einem Antriebsankoppelteil der Mutter verbunden. Dadurch wird erreicht, dass die zahnförmige Teilung des Antriebselementes direkt in Wirkeingriff gebracht wird mit der zahnförmigen Teilung, die an dem Schraubteil der Mutter angebracht ist.

Damit ist zwar die einzelne Mutter in ihrer Konstruktion aufwendiger, allerdings ist das Werkzeug in seinem Aufbau einfacher.

Anspruch 4 betrifft einen Gewindestab mit einem fest an dem Gewindestab befestigten Angriffsmittel. Das Angriffsmittel weist ein Schraubteil und ein Antriebsankoppelteil auf. Das Angriffsmittel weist in seinem Schraubteil auf seiner Außenfläche und/oder seiner Bodenfläche und/oder seiner Deckenfläche eine zahnförmige Teilung auf, die in formschlüssigen Wirkeingriff bringbar ist zu einer zahnförmigen Teilung eines Antriebselementes derart, dass bei einer Ankopplung des Antriebselementes an das Antriebsankoppelteil und bei einer Drehung des Antriebselements um eine Drehachse des Antriebselements das Schraubteil des Angriffsmittels mit dem Gewindestab in eine Drehung um die Längsachse des Gewindestabes versetzt wird.

Die Konstruktion ist vergleichbar mit der Konstruktion gemäß Anspruch 3, wobei hier allerdings nicht die Mutter konstruktiv gestaltet wurde sondern das Angriffsmittel, das fest mit dem Gewindestab verbunden ist.

Anspruch 4 betrifft damit gegenüber Anspruch 1 eine Ausgestaltung, bei der kein separates Werkzeugteil vorgesehen wird zum Antrieb eines herkömmlichen Angriffsmittels mit einem Gewindestab. Bei der Ausgestaltung nach Anspruch 4 sind die entsprechenden Teile in das Angriffsmittel integriert, so dass dieses gemeinsam mit dem Gewindestab mit einem entsprechenden Antriebselement angetrieben werden kann. Das Antriebselement wird dabei mit einem Antriebsankoppelteil des Angriffsmittels verbunden. Dadurch wird erreicht, dass die zahnförmige Teilung des Antriebselementes direkt in Wirkeingriff gebracht wird mit der zahnförmigen Teilung, die an dem Angriffsmittel an dem Schraubteil angebracht ist.

Damit ist zwar der einzelne Gewindestab mit dem Angriffsmittel in seiner Konstruktion aufwendiger, allerdings ist das Werkzeug in seinem Aufbau einfacher.

Gerade diese Ausgestaltung ermöglicht eine besonders vorteilhaft Anwendung im Bereich der Möbel, insbesondere der Küchenschrankmöbel. Diese weisen Füße auf, die aus einer Stange bestehen, an deren unteren Ende ein Standfuß angebracht ist. Die Stange ist als Gewinde ausgebildet, das in eine an dem Boden des Schrankes fest angebracht Mutter eingedreht werden kann. Dadurch sind die Füße des Schrankes einzeln in der Höhe verstellbar.

Bei dieser Anwendung erweist es sich als besonders vorteilhaft, den Standfuß so auszugestalten, dass dieser ein Angriffsmittel darstellt, bei dem die zahnförmige Teilung derart auf der Oberfläche angebracht ist, dass diese in den Bodenteil des Schraubenkopfes eingebracht ist, der sich auf der Seite befindet, an der der Gewindestab von dem Angriffsmittel abgeht. Durch das Anbringen eines Antriebselementes kann dadurch die Justierung und Nivellierung eines Schrankes mit Hilfe einer Bohrmaschine bzw. eines Akkuschraubers erfolgen.

Gemäß Anspruch 5 weist das Antriebselement ein Ankopplungselement auf, an das ein motorisch betriebenes Antriebsmittel ankoppelbar ist, über das das Antriebselement im Sinne einer Rotation um die Drehachse antreibbar ist.

Dieses Antriebsmittel kann elektrisch, pneumatisch oder hydraulisch angetrieben sein. Das Antriebsmittel kann beispielsweise ein Akkuschrauber sein.

Gemäß Anspruch 6 weist das Antriebselement ein Ankopplungselement auf, an das ein manuell betriebenes Antriebsmittel ankoppelbar ist, über das das Antriebselement im Sinne einer Rotation um die Drehachse antreibbar ist.

Das manuell betriebene Antriebselement kann beispielsweise eine Nuss oder ein Bit-Stecker sein, die auf das Ankopplungselement einwirken. Die Nuss oder der Bit-Stecker können wiederum über eine Ratsche oder Umschaltknarre antreibbar sein.

Es ist auch möglich, das Ankopplungselement so auszugestalten, dass daran wahlweise ein motorisch betriebenes Antriebsmittel ankoppelbar ist oder auch ein manuell betätigtes Antriebsmittel.

Wie in den nachfolgenden Ausführungsbeispielen erläutert, kann das Antriebsankoppelteil gegenüber dem Schraubteil bzw. dem hohlzylinderförmigen Bestandteil des Werkzeugteils drehbar sein.

Es ist auch möglich, das Antriebsankoppelteil so mit dem Schraubteil bzw. dem hohlzylindrischen Bestandteil des Werkzeugteils zu verbinden, dass diese Teile nicht gegeneinander drehbar sind. Das Antriebselement weist in diesem Fall ein Befestigungselement auf (in den nachfolgenden Ausführungsbeispielen als Umfassung dargestellt), die so an dem Antriebsankoppelteil befestigbar ist, dass dieses Antriebsankoppelteil gegenüber dem Befestigungselement drehbar ist, wobei dennoch das Antriebselement in radialer Richtung zum Gewindestabe befestigt wird. Ggf. kann das Befestigungselement noch drehbar an dem Antriebselement angebracht sein.

Nachfolgend soll die Erfindung anhand von den Figuren näher erläutert werden. Es zeigt dabei im Einzelnen:
- Fig. 1:: eine Schnittzeichnung einer Mutter, eines Angriffsmittels mit einem Gewindestab und eines Antriebselementes,
- Fig. 2:: einen hohlzylinderförmigen Bestandteil eines Werkzeugteils,
- Fig. 3:: eine perspektivische Darstellung eines Werkzeugteils mit einem hohlzylinderförmigen Bestandteil bzw. einer Mutter bzw. einem Angriffsmittel,
- Fig. 4:: eine alternative Befestigungsmöglichkeit für ein Antriebselement an einem hohlzylinderförmigen Bestandteil eines Werkzeugteils oder einer Mutter oder einem Angriffsmittel und
- Fig. 5:: eine weitere Darstellung der alternativen Befestigungsmöglichkeit.

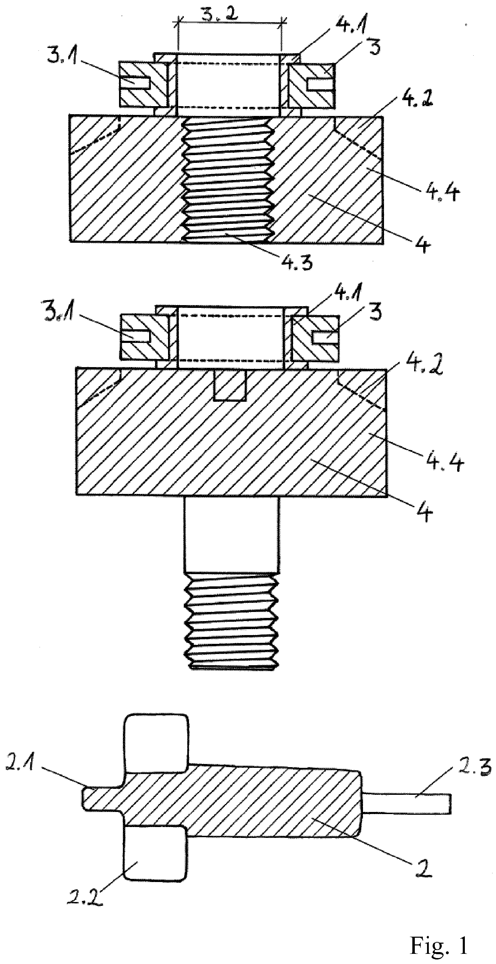

Figur 1 zeigt mehrere Teile einer Vorrichtung zur Übertragung von Drehmomenten. die quer zu einer Gewindeachse erzeugt werden.

In dem Ausführungsbeispiel der Figur 1 ist in der obersten Darstellung eine Mutter zu sehen, in der Darstellung darunter ein Angriffsmittel mit einem daran angebrachten Gewindestab und in der untersten Darstellung ein Antriebselement, durch den die Mutter bzw. das Angriffsmittel mit dem Gewindestab angetrieben werden kann.

Diese Vorrichtung besteht aus einem Antriebsteil (2.) mit einer im vorderen Bereich radial umlaufenden Konterzahnung (2.2.), das - z.B. mit einem handelsüblichen Bit-Aufsatz (2.3.) - in ein Elektro-, Pressluft- oder Handschraubwerkzeug eingesetzt werden kann. Das Antriebsteil stellt dabei über einen Führungsstift (2.1.) eine Verbindung zu einem Aufnahmeloch (3.1.) in einem Werkzeugführungsring (3.) her, der drehbar auf dem anzutreibenden Element (4.) gelagert ist, das mit einem Innengewinde versehen ist.

Das anzutreibende Element (4.) ist im Sinne dieser Erfindung das Schraubteil der Mutter, der Werkzeugführungsring (3.) das Antriebsankoppelteil der Mutter.

Ebenso kann das anzutreibende Element (4.) das Schraubteil des Angriffsmittels sein, das beispielsweise der Kopf einer Schraube sein kann. Der Werkzeugführungsring (3.) ist das Antriebsankoppelteil des Angriffsmittels.

Dieses anzutreibende Element (4.) wird auf der dem Werkzeugführungsring (3.) zugewandten Seite von einem Zahnkranz (4.2.) umlaufen, in den die Konterzahnung (2.2.) bei hergestellter Verbindung von Antriebsteil (2.) und angetriebenem Element (4.) eingreift.

Das Antriebsteil (2.) ist damit das Antriebselement im Sinne der vorliegenden Erfindung.

Das in Figur 1 dargestellte Ausführungsbeispiel betrifft insoweit eine spezielle Ausgestaltung einer Mutter gemäß Anspruch 3 sowie ein Angriffsmittel mit einem daran angebrachten Gewindestab gemäß Anspruch 4. Es ist ersichtlich, dass eine entsprechende konstruktive Ausgestaltung auch möglich ist für ein Werkzeugteil mit einem entsprechend angetriebenen hohlzylinderförmigen Bestandteil.

Es ist ebenso ersichtlich, dass bei der Ausgestaltung des Angriffsmittels mit dem Gewindestab die zahnförmige Teilung und der Werkzeugführungsring auf der Seite des anzutreibenden Elemente (4.) angebracht sein können, von dem der Gewindestab abgeht.

Mit der vorliegenden Erfindung können Drehmomente auf Muttern oder auf Angriffsmittel mit einem daran angebrachten Gewindestab übertragen werden. Dabei erfolgt eine Kraftumlenkung. Das Drehmoment kann über das Antriebselement quer zur Längsachse des Gewindestabes (Gewindeachse) aufgebracht werden. Insbesondere kann das Drehmoment durch ein Elektro-, Pressluft- oder Handschraubwerkzeug erzeugt werden.

Eine derartige Vorrichtung erlaubt es, Muttern entlang eines Gewindes zu bewegen oder auch ein Angriffsmittel mit einem daran angebrachten Gewindestab durch eine Rotation in Längsrichtung des Gewindestabes auch unter beengten Verhältnissen, in denen ein Werkzeug nicht in Längsrichtung zum Gewinde angesetzt und dann bewegt werden kann. Dabei ist ein Antrieb durch einen Elektro- oder Pressluftschraubendreher möglich.

Nach dem bekannten Stand der Technik werden Muttern oder Schrauben (Angriffsmittel mit daran angebrachtem Gewindestab in beengten Verhältnissen von Hand eingedreht und mit einem Schraubenschlüssel festgezogen.

Das Eindrehen von Hand ist zeitraubend. Muttern können mit Hilfe eines Akku- oder Pressluftschraubers in Schraubrichtung grundsätzlich nur bis zur Tiefe der verwendeten Nuss geschraubt werden. Gerade im Hausbau oder bei der Gerüstkonstruktion erfordert es einen hohen Zeitaufwand, die Muttern erst von Hand über die gesamte Länge eines Gewindestabes zuzudrehen und dann mit dem Schraubenschlüssel festzuziehen. Die im Stand der Technik bekannten Schnellmontagemuttern sind fehleranfällig und vergleichsweise teuer.

Mit der vorliegenden Erfindung kann auf die Muttern bzw. die Angriffsmittel mit einem daran angebrachten Gewindestab auch mit einem Handwerkzeug wie einem Elektro- oder Pressluftschrauber, das auch in einem Winkel quer zur Schraubrichtung angesetzt werden kann, das Drehmoment des Handwerkzeugs von der Seite her in Schraubrichtung der Mutter oder des Angriffsmittels mit dem daran angebrachten Gewindestab übertragen werden.

In einer besonders vorteilhaften Ausführungsform bei dem Ausführungsbeispiel nach Figur 1 kann der Führungsstift (2.1.) magnetisch sein.

In Verbindung mit einem nichtmagnetischen Führungsring (3.) und einer magnetisierbaren Ummantelung der Aufnahmelöcher (3.1.) würden sich diese automatisch zum Führungsstift (2.1.) ausrichten, was das Herstellen der Verbindung erleichtert.

Am Antriebsteil (2.) sitzt in dem hier beschriebenen Beispiel hinter dem Führungsbolzen (2.1.) ein das Antriebsteil (2.) umlaufender Zahnkranz (2.2.).

Das Antriebsteil (2.) wird in dem hier beschriebenen Beispiel in einem Winkel quer zur Schraubrichtung mit dem Führungsstift (2.1.) in eines der Aufnahmelöcher (3.1.) im Führungsring (3.) gesteckt. Mit händischem Druck wird das Antriebsteil (2.) in dieser Position fixiert. Dabei greift der Zahnkranz (2.2.) des Antriebsteils (2.) in einen zugeordneten Zahnkranz (4.2.) ein, der auf dem Kopf (4.4.) des anzutreibenden Elements (4.) sitzt und diesen ringförmig umläuft. Der Einsteckwinkel kann je nach Ausgestaltung der Aufnahmelöcher (3.1.) zwischen 15° und 135° betragen, wobei sich ein 90°-Winkel in vielen Fällen bereits als praktisch erwiesen hat. Andere Winkel sind dabei auch möglich.

In dem dargestellten Beispiel ist - ebenfalls auf dem Kopf (4.4.) des angetriebenen Elements (4.) - eine Gleitlagerhalterung (4.1.) befestigt, auf die der Führungsring (3.) so aufgesteckt ist, dass der Reibungswiderstand zwischen Führungsring (3.) und angetriebenem Element (4.) möglichst minimiert ist. Dies kann zum Beispiel mittels eines Kugel- oder Rollenlagers oder durch Verwendung eines geeigneten Schmiermittels geschehen.

Die Gleitlagerhalterung (4.1.) ist so ausgestaltet, dass sie über den Führungsring (3.) hinausragt. Wird eine Kontermutter auf die erste Mutter aufgedreht, so drückt sie auf die Gleitlagerhalterung (4.1.), die fest mit dem angetriebenen Element (4.) verbunden ist und fixiert diese so an ihrem Platz.

Der Innendurchmesser des Führungsrings (3.) einschließlich der Gleitlagerhalterung (4.1.) kann größer sein als der Außendurchmesser des Gewindestabes, mit dem die Schraubverbindung hergestellt werden soll. Dadurch können alle Teile über die gesamte Länge des Gewindestabs geführt werden. Es ist ebenso möglich, in der Innenöffnung des Führungsringes ein Gewinde vorzusehen, das mit dem Gewinde des Gewindestabes korreliert. In diesem Fall kann das Gewinde durch den Führungsring (3.) durchgedreht werden, der drehbar ist gegenüber dem anzutreibenden Element (4.) Da sich der Führungsring (3.) dann auch an dem Gewinde des Gewindestabes abstützt, wird die Stabilität verbessert.

Wurde das Antriebsteil (2.) mit dem Führungsring (3.) verbunden, so greifen die Zahnung des Zahnkranzes (4.2.) und die Zahnung der Konterzahnung (2.2.) ineinander. Wird nun das Drehwerkzeug (Elektro- oder Pressluft oder mechanisch) betätigt, überträgt sich das jeweils eingestellte Drehmoment über das Antriebsteil (2.) auf den Zahnkranz (4.2.) und bewegt damit die Mutter bzw. das Angriffsmittel mit dem daran angebrachten Gewindestab in einem Winkel quer zum ausgeübten Drehmoment entlang der Gewindestange.

Es zeigt sich, dass bei der vorliegenden Erfindung insgesamt nur ein geringer Platzbedarf in Längsrichtung des Gewindestabes besteht, um das Antriebselement anzubringen.

Jede Art von Gewinde kann mit dieser Vorrichtung von der Seite her mit einem Handwerkzeug schnell auf und zugedreht werden. Insbesondere kann eine Mutter über die gesamte Länge eines Gewindestabes geführt werden.

In einem besonders vorteilhaften Ausführungsbeispiel lassen sich der Führungsstift (2.1.) und die Aufnahmelöcher (4.2.) mit einem Kugelschnepper verbinden, um eine abrutschsichere Verbindung herzustellen.

Der Führungsring (3.) ist drehbar im Gleitlager (4.1.) gelagert. Er verfügt in der Mantelaußenfläche über (beispielsweise) drei symmetrisch angeordnete Löcher (3.1.), die im 90° Winkel zur Gewindeachse eingelassen sind. Die Aufnahmelöcher (3.1.) können auch in einem anderen Winkel als 90° Grad zur Gewindeachse in den Mantel des Führungsrings eingelassen sein, um eine Handhabung nicht nur direkt von der Seite sondern auch in einem entsprechenden Winkel zu ermöglichen. Die zahnförmigen Teilungen sind vorteilhaft als Kegelräder ausgebildet, wobei die Steigungen der Kegelflächen dann entsprechend angepasst sein müssen.

Wird der Führungsbolzen (2.1.) des Antriebsteils (2.) in eines der Aufnahmelöcher (3.1.) gesteckt, so stellen Zahnkranz (4.2.) und Konterzahnung (2.2.) eine Verbindung her.

Am Schraubwerkzeug kann in an sich bekannter Weise das gewünschte Drehmoment eingestellt werden. Dabei sind auch die Übersetzungsverhältnisse auf die Mutter bzw. das Angriffsmittel mit dem daran angebrachten Gewindestab zu beachten.

Das Antriebsteil wird mit Druck des Anwenders fixiert. Das erzeugte Drehmoment bewegt das Antriebsteil (2.). Dieses dreht sich im Aufnahmeloch (3.1.). Die Konterzahnung (2.2.) des Antriebselements (2.) greift in den Zahnkranz (4.2.) ein und bewegt diesen. Dadurch wird die Mutter bzw. das Angriffsmittel mit dem daran angebrachten Gewindestab (4.) in Schraubrichtung gedreht und bewegt sich in Längsrichtung des Gewindestabes (ohne Abbildung). Wenn damit eine Mutter (4.) angetrieben wird, lässt diese sich über die gesamte Länge des Gewindestabes bewegen.

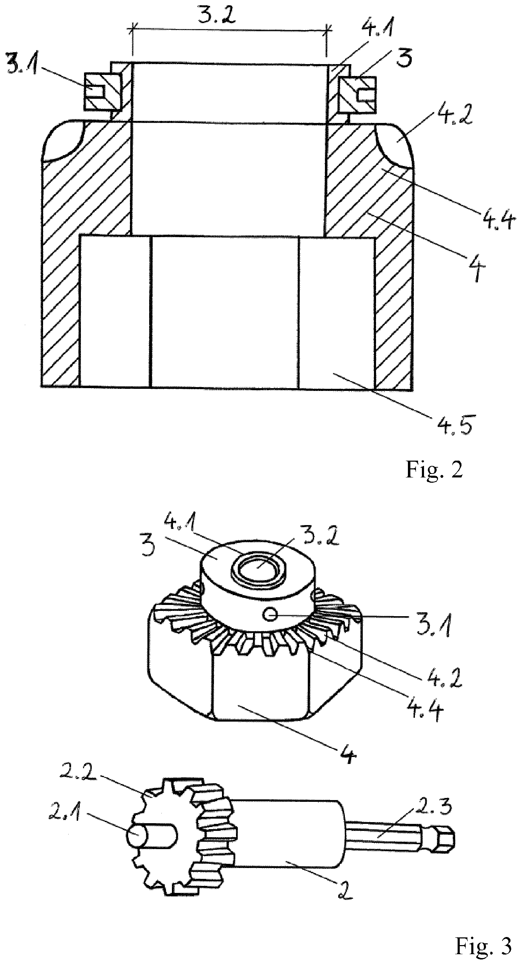

Figur 2 zeigt einen hohlzylinderförmigen Bestandteil eines Werkzeugteils nach der vorliegenden Erfindung. Dieser hohlzylinderförmige Bestandteil ist in seinen wesentlichen Einzelheiten identisch aufgebaut zu der Mutter bzw. dem Angriffsmittel nach Figur 1.

Der hohlzylinderförmige Bestandteil des Werkzeugteils nach der Darstellung der Figur 2 unterscheidet sich von der Mutter gemäß Figur 1 dadurch, dass die Innenseite kein Gewinde aufweist sondern eine Innenöffnung (4.5), die in formschlüssigen Eingriff mit der Außenfläche einer Mutter, eines Angriffsmittels oder eines Adapterstücks gebracht werden kann. Dies kann erfolgen, indem die Mutter, das Angriffsmittel oder das Adapterstück mit einem Sechskant-Außenumfang ausgebildet sind.

Wird der hohlzylinderförmige Bestandteil auf eine Mutter oder ein Angriffsmittel aufgesetzt, wird die Mutter bzw. das Angriffsmittel zusammen mit dem Teil 4 des hohlzylinderförmigen Bestandteils gedreht.

Figur 3 zeigt eine perspektivische Darstellung eines Werkzeugteils mit einem hohlzylinderförmigen Bestandteil sowie - in separater Darstellung - einem Antriebselement, das mit dem hohlzylinderförmigen Bestandteil in Verbindung gebracht werden kann.

Wie sich aus den Erläuterungen zu den Figuren 1 und 2 ergibt, kann in der Darstellung der Figur 3 ein hohlzylinderförmiger Bestandteil dargestellt sein, der in seiner Innenöffnung eine hier nicht dargestellte Aufnahme aufweist, die mit der Außenfläche einer Mutter korrespondiert.

Ebenso kann es sich anstatt einem hohlzylinderförmigen Bestandteil eines Werkzeugteils um eine Mutter handeln, die dann entsprechend auf der Innenfläche ein Gewinde aufweist.

Ebenso kann es sich anstatt einem hohlzylinderförmigen Bestandteil eines Werkzeugteils um ein Angriffsmittel handeln, an dem ein (hier allerdings nicht dargestellter) Gewindestab angebracht ist.

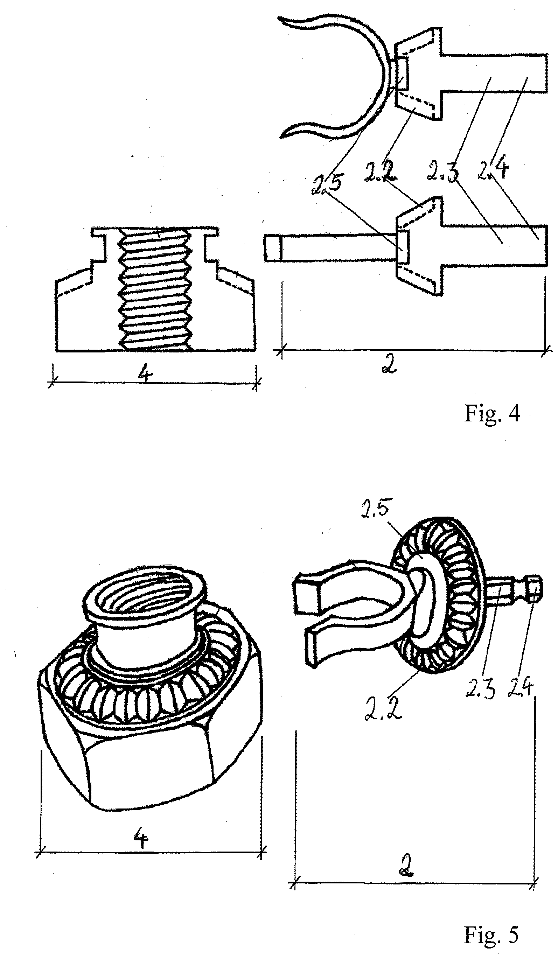

Figur 4 zeigt eine alternative Befestigungsmöglichkeit für ein Antriebselement an einem hohlzylinderförmigen Bestandteil eines Werkzeugteils oder einer Mutter oder einem Angriffsmittel mit einem daran angebrachten Gewindestab.

Das Antriebsteil (2.) weist wiederum einem Antriebsschaft (2.3.) auf mit einem Aufnahmeelement (2.4.) für ein Schraubwerkzeug, eine dieses im vorderen Bereich radial umlaufende Konterzahnung (2.2.) und einer vor der Konterzahnung (2.2.) befindlichen, drehbar gelagerten Umfassung (2.1.).

Diese Umfassung (2.1) in dem Ausführungsbeispiel der Figur 4 ersetzt den Führungsstift der Figuren 1 bis 3.

Diese Umfassung (2.1) kann in eine Führungsnut (3.) eingreifen, die in den Kopf (4.3.) eines angetriebenen Elements (4.) eingelassen ist, wobei das angetriebene Element (4.) mit einem Gewinde (4.2.) versehen ist oder als hohlzylinderförmiger Bestandteil eines Werkzeugteils ausgestaltet sein kann oder ein Angriffsmittel darstellt, an dem ein Gewindestab angebracht ist. Auf der Mantelfläche des angetriebenen Elementes (4.) befindet sich unterhalb des Kopfes (4.3.) ein umlaufender Zahnkranz (4.1.), in den bei hergestellter Verbindung von Umfassung (2.1.) und Führungsnut (3.) die Konterzahnung (2.2.) formschlüssig eingreift.

Damit wird der bewegliche Teil vom angetriebenen Element (4.) auf das Antriebsteil (2.) verlagert. Dadurch kann der Kopf (4.3.) des angetriebenen Elements (4.) so ausgestaltet werden, dass dieser einen Teil des Innengewindes bildet, wenn das angetriebene Element 4 eine Mutter ist. Ist das angetriebene Element 4 ein hohlzylinderförmiger Bestandteil eines Werkzeugteils, kann auch dieser Kopf (4.3) so ausgestaltet sein, dass dessen Innenfläche in formschlüssigem Eingriff mit der Außenfläche der anzutreibenden Mutter ist.

Dadurch besteht eine bessere Abstützung des angetriebenen Elementes (4.) in dem Bereich, in dem das Antriebselement (2.) angreift.

Ebenso kann es sich dabei um ein Angriffsmittel mit einem daran angebrachten Gewindestab handeln. In diesem Fall ist kein Innengewinde vorhanden. Statt dessen schließt sich ein (hier nicht dargestellter) Gewindestab an.

Das Antriebselement (2.) besteht wiederum aus einem Antriebsschaft, der als Aufnahmeelement (2.3.) für ein handelsübliches Schraubwerkzeug (ohne Abbildung) ausgestaltet ist (z.B. Bit-Aufsatz). Im vorderen Bereich des Antriebsschafts sitzt ein radial umlaufender Zahnkranz (2.2.) in Form eines Kegelrades.

Vorne am Antriebsschaft sitzt eine einseitig offene Umfassung (2.1.). Diese ist mit einem Kugellager (2.5.) drehbar mit dem Antriebsschaft verbunden. In einer besonders vorteilhaften Ausführungsform kann die Umfassung (2.1.) z.B. mittels einer Steckfassung ausgetauscht werden, z.B. wenn Materialermüdung auftritt.

Das Antriebselement (2.) wird in der Anwendung in verschiedenen Größen, passend zu den verschieden großen angetriebenen Elementen (4.) ausgestaltet. Das angetriebene Element (4.) kann als Mutter ausgestaltet sein, als hohlzylinderförmiger Bestandteil eines Werkzeugteils oder als Angriffsmittel..

In den Kopf (4.3.) des angetriebenen Elements (4.) ist eine Führungsnut (3.) eingelassen. Diese ist so ausgestaltet, dass die Umfassung (2.1.) sie klemmend, aber nicht arretierend umschließen kann. Die Reibung zwischen Umfassung (2.1.) und Führungsnut (3.) ist minimiert, indem ein Material mit möglichst geringem Reibungskoeffizienten verwendet wird, z.B. Kupfer oder glasfaserverstärktes Polyamid.

Die Umfassung (2.1.) umschließt dabei die Führungsnut (3.) über den Durchmesser der Führungsnut (3.) hinaus und läuft dann wieder zusammen. In einer besonders vorteilhaften Ausführungsform laufen die Enden der Umfassung (2.1.) wieder auseinander, um das Aufstecken auf die Führungsnut (3.) zu erleichtern. Die Enden können sich auch konisch nach vorne verjüngen.

Unterhalb des Kopfes (4.3.) ist ein radial umlaufender Zahnkranz (4.1.) eingelassen. Wird die Umfassung (2.1.) auf die Führungsnut (3.) gesteckt, so greifen die Zahnkränze (2.2.) und (4.1.) formschlüssig ineinander. Wird nun das Schraubwerkzeug betätigt, wird die Drehbewegung über den Zahnkranz (2.2.) des Antriebselements (2.) auf den Zahnkranz (4.1.) des angetriebenen Elements (4.) übertragen.

Ist das angetriebene Element (4.) mit einem Innengewinde (4.2.) ausgebildet (als Mutter), so ist das Innengewinde durchgängig ausgestaltet, das angetriebene Element (4.) ist also an beiden Enden offen und ein Gewindestab kann durch das gesamte Element geschraubt werden.

Ist das angetriebene Element (4.) als hohlzylinderförmiger Bestandteil des Werkzeugteils ausgebildet, so ist es ebenfalls hohl, ohne Innengewinde bzw. mit einem Innengewinde nur in dem Bereich, der nicht formschlüssig an der Außenfläche der Mutter bzw. dem Angriffsmittel anliegt. Das angetriebene Element (4.) kann dann auch im Bereich des Kopfes (4.3) so ausgestaltet sein, dass dieses formschlüssig an der Außenfläche der Mutter anliegt.

Das angetriebene Element (4.) kann wiederum auch ein Angriffsmittel sein mit einem (hier nicht dargestellten) daran angebrachten Gewindestab. Das Innengewinde entfällt dann.

Durch die Verlagerung der Aufgabe des Werkzeugführungsrings nach den Beispielen der Figuren 1 bis 3 vom angetriebenen Element (4.) auf die Umfassung (2.1.) des Antriebselements (2.) fällt ein Herstellungsschritt weg. Da das Antriebselement (2.) im Gegensatz zum angetriebenen Element (2.2.) kein Verbrauchselement ist, kann es hochwertig produziert werden bei minimalen Mehrkosten.

Ein weiteres Ausführungsbeispiel zu der Ausgestaltung gemäß Figur 4 ist in Figur 5 dargestellt.

Im Ausführungsbeispiel ist eine handelsübliche Sechskant-Mutter (4.) mit Innengewinde (4.2.) zu sehen.

Auf der oberen, dem Kopf (4.3.) zugewandten Mantelfläche der Mutter (4.) ist ein Kegelrad (4.1.) eingelassen, das die Mutter (4.) konzentrisch umläuft und radial ausgerichtet ist.

In den Kopf (4.3.) der Mutter (4.) ist eine Führungsnut (3.) eingelassen. Das Innengewinde (4.2.) der Mutter (4.) durchzieht den gesamten Kopf (4.3.). Der Schaft (2.3.) des Antriebselements (2.) ist als Bit-Stecker (2.4.) ausgebildet. Er wird in einen handelsüblichen Elektro- oder Pressluftschraubendreher oder einen manuellen Schraubendreher eingesteckt (ohne Abbildung).

Den Schaft umläuft am vorderen Ende konzentrisch ein radial ausgerichtetes Kegelrad (2.2.). Die Zahnung des Kegelrades (2.2.) ist passend zur Zahnung des Kegelrades (4.1.) ausgerichtet.

Am vorderen Ende des Antriebsschafts (2.3.) ist ein Kugellager (2.5.) eingelassen. Auf diesem sitzt eine Klemme (2.1.), die beispielsweise als Metallklemme aus Kupfer bestehen kann oder auch aus Kunstsoff oder anderen Materialien. In einem besonders vorteilhaften Ausführungsbeispiel kann die Klemme (2.1.) über eine Steckverbindung (ohne Abbildung) ausgetauscht werden.

Die Klemme (2.1.) ist so ausgebildet, dass sie klemmend aber nicht arretierend auf die Führungsnut (3.) aufgesteckt werden kann. Sie umschließt dabei den Kopf (4.3.) über den Durchmesser der Führungsnut (3.) hinaus und läuft dann wieder zusammen, um den Klemmeffekt zu erzeugen.

In einem besonders vorteilhaften Ausführungsbeispiel laufen die Enden der Klemme (2.1.) wieder auseinander, um ein leichteres Erfassen der Führungsnut (3.) zu erlauben und sind zu diesem Zweck auch konisch nach vorne verjüngt.

Im Ausführungsbeispiel einer Mutter wird die Mutter (4.) auf den Gewindestab (ohne Abbildung) aufgesteckt. Die Klemme (2.1.) (in diesem Beispiel als Metallklemme ausgestaltet) wird auf die Führungsnut (3.) aufgesteckt, die Zähne der Kegelräder (4.1.) und (2.2.) greifen dabei ineinander. Wird nun mit dem Schraubendreher ein Drehmoment erzeugt, wird dieses über die Kegelräder (2.2.) und (4.1.) auf die Mutter (4.) übertragen und je nach Drehrichtung wird die Mutter auf den Gewindestab auf- oder abgeschraubt.

Es ist ersichtlich, dass es sich bei der Darstellung der Figur im Prinzip auch um ein hohlzylinderförmiges Bestandteil eines Werkzeugteils handeln kann, wenn die Innenöffnung entsprechend so ausgestaltet ist, dass diese die Außenfläche einer Mutter formschlüssig umgreift. Ebenso ist ersichtlich, dass es sich auch hier wieder um ein Angriffsmittel mit einem daran angebrachten Gewindestab handeln kann.

## Patentansprüche

1. Werkzeugteil zur Übertragung von Antriebskräften auf Muttern zu deren Bewegung entlang eines Gewindestabes durch eine Rotation der Mutter um die Längsachse des Gewindestabes oder auf Angriffsmittel eines Gewindestabes,
**dadurch gekennzeichnet, dass** das Werkzeugteil einen hohlzylinderförmigen Bestandteil (4) aufweist, sowie ein Antriebsankoppelteil (3), wobei der hohlzylinderförmige Bestandteil (4) auf seiner Außenfläche und/oder Bodenfläche und/oder Deckenfläche eine zahnförmige Teilung (4.2) aufweist, die in formschlüssigem Wirkeingriff steht bzw. bringbar ist zu einer zahnförmigen Teilung (2.2) eines Antriebselementes (2) derart, dass bei einer Ankopplung des Antriebselementes (2) an das Antriebsankoppelteil (2) und einer Drehung des Antriebselements (2) um eine Drehachse des Antriebselements (2) der hohlzylinderförmige Bestandteil (4) des Werkzeugteils in eine Drehung um die Längsachse des hohlzylinderförmigen Bestandteils (4) versetzt wird, wobei der hohlzylinderförmige Bestandteil (4) eine Innenöffnung (4.5) aufweist, die in formschlüssigen Eingriff mit der Außenfläche der Mutter oder des Angriffsmittels bringbar ist, oder wobei der hohlzylinderförmige Bestandteil (4) eine Innenöffnung (4.5) aufweist, die in formschlüssigen Eingriff mit der Außenfläche eines Adapterstücks bringbar ist, dessen Innenöffnung derart bemessen ist, dass diese in formschlüssigen Eingriff mit einer Außenfläche einer Mutter oder eines Angriffsmittels einer bestimmten Normgröße bringbar ist oder wobei der hohlzylinderförmige Bestandteil (4) drehfest verbindbar ist mit einem Adapterstück, dessen Innenöffnung derart bemessen ist, dass diese in formschlüssigen Eingriff mit einer Außenfläche einer Mutter oder eines Angriffsmittels einer bestimmten Normgröße bringbar ist.

2. Werkzeugteil nach Anspruch 1,
**dadurch gekennzeichnet, dass** das Werkzeugteil (3,4) eine Handhabe aufweist, mittels der das Werkzeugteil (3,4) an einem anderen Punkt des Außenumfangs gehalten werden kann, als dies dem Angriffspunkt des Antriebselementes (2) an dem hohlzylinderförmigen Bestandteil (4) entspricht.

3. Mutter mit einem Innengewinde,
**dadurch gekennzeichnet, dass** die Mutter ein Schraubteil (4) und ein Antriebsankoppelteil (3) aufweist, wobei die Mutter in ihrem Schraubteil (4) auf ihrer Außenfläche und/oder ihrer Bodenfläche und/oder ihrer Deckenfläche eine zahnförmige Teilung (4.2) aufweist, die in formschlüssigem Wirkeingriff bringbar ist zu einer zahnförmigen Teilung (2,2) eines Antriebselementes (2) derart, dass bei einer Ankopplung des Antriebselementes (2) an das Antriebsankoppelteil (3) und bei einer Drehung des Antriebselements (2) um eine Drehachse des Antriebselements (2) das Schraubteil (4) der Mutter in eine Drehung um die Längsachse des Innengewindes der Mutter (4) versetzt wird.

4. Gewindestab mit einem fest an dem Gewindestab befestigten Angriffsmittel,
**dadurch gekennzeichnet, dass** das Angriffsmittel ein Schraubteil (4) und ein Antriebsankoppelteil (3) aufweist, wobei das Angriffsmittel in seinem Schraubteil (4) auf seiner Außenfläche und/oder seiner Bodenfläche und/oder seiner Deckenfläche eine zahnförmige Teilung (4.2) aufweist, die in formschlüssigem Wirkeingriff bringbar ist zu einer zahnförmigen Teilung (2.2) eines Antriebselementes (2) derart, dass bei einer Ankopplung des Antriebselementes (2) an das Antriebsankoppelteil (3) und bei einer Drehung des Antriebselements (2) um eine Drehachse des Antriebselements (2) das Schraubteil (4) des Angriffsmittel mit dem Gewindestab in eine Drehung um die Längsachse des Gewindestabes versetzt wird.

5. Werkzeugteil, Mutter oder Gewindestab nach einem der Ansprüche 1 bis 4,
**dadurch gekennzeichnet, dass** das Antriebselement (2) ein Ankopplungselement (2.3) aufweist, an das ein motorisch betriebenes Antriebsmittel ankoppelbar ist, über das das Antriebselement (2) im Sinne einer Rotation um die Drehachse antreibbar ist.

6. Werkzeugteil, Mutter oder Gewindestab nach einem der Ansprüche 1 bis 5,
**dadurch gekennzeichnet, dass** das Antriebselement (2) ein Ankopplungselement (2.3) aufweist, an das ein manuell betriebenes Antriebsmittel ankoppelbar ist, über das das Antriebselement (2) im Sinne einer Rotation um die Drehachse antreibbar ist.
